# EUROPÄISCHE PATENTANMELDUNG

(11) **EP 0 762 088 A2**
(43) Veröffentlichungstag der Anmeldung: **12.03.1997**
(21) Anmeldenummer: 96110874.3
(22) Anmeldetag: 05.07.1996
(51) Int. Cl.: G01F 23/22

(54) **Verfahren und Vorrichtung zur Grenzstanderfassung von Flüssigkeiten und Schüttgütern**

(30) Priorität: 11.09.1995 CH 2567/95
(71) Anmelder: Georg Fischer Rohrleitungssysteme AG, CH-8201 Schaffhausen (CH)
(72) Erfinder: Schalk, Adelbert, 79793 Wutöschingen-Horheim (DE)
(74) Vertreter: Szilagyi, Marianne

(57) **Zusammenfassung**

Bei einem Verfahren zur Grenzstanderfassung von Flüssigkeiten und Schüttgütern in Behältern und Rohrleitungen wird die Aenderung des Schwingverhaltens eines zum Schwingen angeregten Sensors elektronisch erfasst und zur Auslösung eines Schaltbefehls verwendet. Als Sensor wird ein Parallel-Bimorph-Piezoelement (22) mit einer gemeinsamen Mittelelektrode (44) und zwei Aussenelektroden (46,48) eingesetzt. Zwischen der Mittelelektrode (44) und einer ersten Aussenelektrode (46) wird eine erste Wechselspannung (U1) mit einer Oszillatorfrequenz (f1) angelegt, zwischen der Mittelelektrode (44) und der zweiten Aussenelektrode (48) eine zweite Wechselspannung als Schwingamplitude (U2) mit zugehöriger Schwingfrequenz (f2) gemessen und die gemessene Schwingamplitude (U2) oder Schwingfrequenz (f2) in ein Ausgangsschaltsignal umgewandelt.

Bei einer zur Durchführung des Verfahrens geeigneten Vorrichtung ist das Piezoelement (22) flüssigkeitsdicht in eine Kunststoffhülle (24) eingesetzt, wobei die Kunststoffhülle (24) ihrerseits flüssigkeitsdicht mit einem die Wand (16) eines Behälters oder einer Rohrleitung durchsetzenden Kunststoffgehäuse (12) verbunden ist und die Kunststoffhülle (24) mit dem Piezoelement (22) in ein am Kunststoffgehäuse (12) angeformtes Schutzrohr (18) einragt.

## Beschreibung

Die Erfindung betrifft ein Verfahren zur Grenzstanderfassung von Flüssigkeiten und Schüttgütern in Behältern und Rohrleitungen, bei dem die Aenderung des Schwingverhaltens eines zum Schwingen angeregten Sensors elektronisch erfasst und zur Auslösung eines Schaltbefehls verwendet wird. Im Rahmen der Erfindung liegt auch eine zur Durchführung des Verfahrens geeignete Vorrichtung.

In nahezu allen Anwendungen von Rohrleitungssystemen kommen Behälter oder Tanks zum Einsatz. Oft muss hier beim Erreichen eines Mindestfüllstandes ein Schaltsignal ausgegeben werden, das z.B. eine Pumpe zur Befüllung eines Behälters ansteuert. Wird nach einer bestimmten Zeit der obere Füllstandswert erreicht, muss über ein zweites Schaltsignal die Pumpe ausgeschaltet werden. Es ist auch denkbar, dass eine Pumpe aus einem Tank ein Medium bis zum Erreichen einer Mindestfüllhöhe fördert. Danach muss die Pumpe zur Vermeidung von Trockenlauf ausgeschaltet werden. Bei manchen industriellen Prozessen ist es auch notwendig zu wissen, ob eine Rohrleitung gefüllt oder leer ist. Beispielsweise ist bei Kreiselpumpen Trockenlauf generell zu vermeiden, so dass eine Pumpe nur dann eingeschaltet werden darf, wenn das Rohr der Ansaugseite gefüllt ist.

Zur Grenzstanderfassung sind sogenannte Vibrationsgrenzschalter bekannt, z.B. aus der DE 42 03 967 C2. Das als Sensor eingesetzte Vibrationsteil besteht aus einer Schwinggabel, deren Schwingverhalten sich bei Bedeckung des Sensors mit Füllgut ändert. Ueber eine integrierte Messelektronik wird diese Schwingungsänderung erfasst und ein Schaltbefehl ausgelöst. Die auf dem Schwinggabel-Prinzip beruhenden Grenzschalter sind robust, genau, abgleichfrei und wartungsarm. Als Metallausführungen sind sie jedoch für viele Medien bzw. für hochreine Anwendungen nicht oder kaum geeignet.

Angesichts dieses Standes der Technik hat sich der Erfinder die Aufgabe gestellt, ein Verfahren sowie eine Vorrichtung der eingangs erwähnten Art zu schaffen, welche neben den genannten Vorzügen der auf dem Vibrationsprinzip beruhenden Verfahren und Vorrichtungen ein bezüglich flüssiger Medien erweitertes Einsatzgebiet aufweisen.

Zur erfindungsgemässen Lösung der Aufgabe führt bei einem Verfahren der eingangs genannten Art, dass bei einem als Sensor eingesetzten Parallel-Bimorph-Piezoelement mit einer gemeinsamen Mittelelektrode und zwei Aussenelektroden zwischen der Mittelelektrode und einer ersten Aussenelektrode eine erste Wechselspannung mit einer Oszillatorfrequenz angelegt, zwischen der Mittelelektrode und der zweiten Aussenelektrode eine zweite Wechselspannung als Schwingamplitude mit zugehöriger Schwingfrequenz gemessen und die gemessene Schwingamplitude oder Schwingfrequenz in ein Ausgangsschaltsignal umgewandelt wird.

Mit der erfindungsgemässe Verwendung eines Parallel-Bimorph-Piezoelementes ergibt sich auf einfache Weise ein kombiniertes Sensor/Aktor-System mit hoher Schaltgenauigkeit. Für eine optimale Betriebsweise wird die Resonanzfrequenz als Oszillatorfrequenz gewählt.

Bei einer zur Durchführung des erfindungsgemässen Verfahrens geeigneten Vorrichtung ist das Piezoelement flüssigkeitsdicht in eine Kunststoffhülle eingesetzt, wobei bei einer besonders bevorzugten Ausführungsform die Kunststoffhülle ihrerseits flüssigkeitsdicht mit einem die Wand eines Behälters oder einer Rohrleitung durchsetzenden Kunststoffgehäuse verbunden ist.

Dank der Vollkunststoff-Ausführung eignet sich die erfindungsgemässe Vorrichtung für den Einsatz in sämtlichen flüssigen Medien, gegen die der eingesetzte Kunststoff beständig ist. Geeignete Kunststoffe sind beispielsweise PE, PVC, PP, PVDF sowie weitere für Behälter und Rohrleitungssysteme eingesetzte Kunststoffe. Die Ausführung in Vollkunststoff bietet auch den Vorteil, dass Toträume und Hinterschneidungen vermieden werden können und das Gerät somit auch für den Einsatz in hochreinen Medien geeignet ist.

Zum Schutz vor unzulässig hohen mechanischen Belastungen kann ein am Kunststoffgehäuse angeformtes Schutzrohr vorgesehen sein, in welches die Kunststoffhülle mit dem Piezoelement einragt.

Eine mit dem Piezoelement elektrische verbundene Elektronik-Einheit ist bevorzugt im Kunststoffgehäuse angeordnet.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Querschnitt durch ein Messgerät zur Grenzstanderfassung;
- Fig. 2: einen Schnitt durch Fig. 1 nach deren Linie I-I;
- Fig. 3: ein Parallel-Bimorph-Piezoelement.

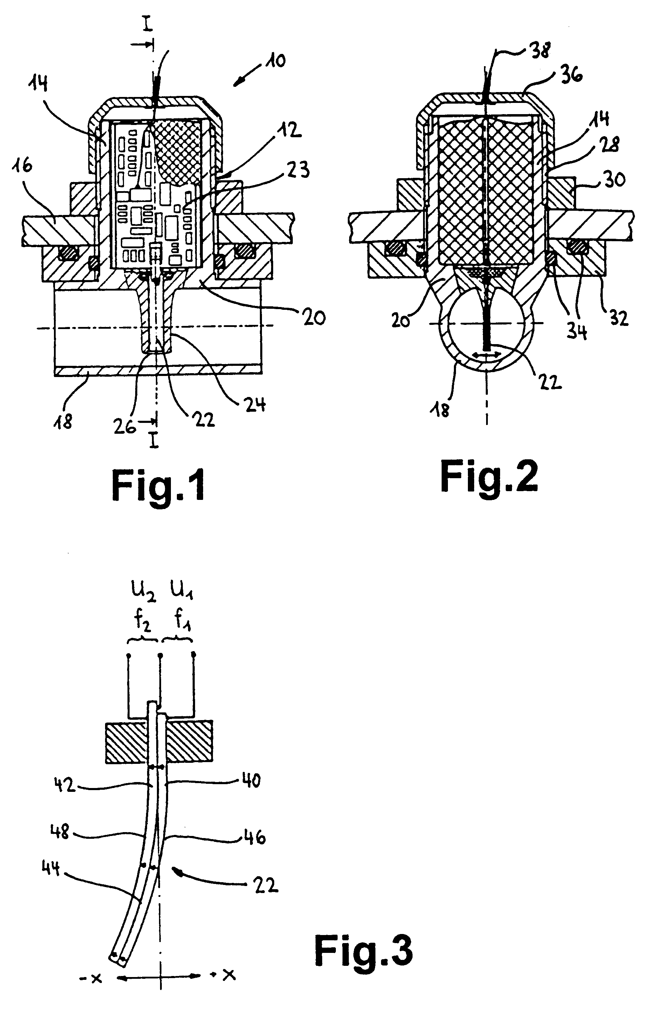

Ein in den Fig. 1 und 2 dargestelltes Messgerät 10 zur Grenzstanderfassung von Flüssigkeiten und Schüttgütern weist ein Kunststoffgehäuse 12 mit einem zylindrischen Teil 14 sowie einem mit diesem über einen Bodenteil 20 einstückig verbundenen rohrförmigen Teil 18 auf. Der zylindrische Teil 14 ist derart durch eine Behälterwand 16 hindurchgeführt, dass der rohrförmige Teil 18 innerhalb eines in der Zeichnung aus Gründen der besseren Uebersicht nicht näher dargestellten Behälters liegt.

In das Innere des rohrförmigen Teils 18 ragt flossenförmig ein Parallel-Bimorph-Piezoelement 22 ein, welches flüssigkeitsdicht von einer Kunststoffhülle 24 umgeben ist. Die Kunststoffhülle 24 greift in den Bodenteil 20 des Kunststoffgehäuses 12 ein und ist mit diesem verschweisst. Das Piezoelement 22 ist über das in den zylindrischen Teil 14 mündende offene Ende der Kunststoffhülle 24 mit einer im zylindrischen Teil 14 angeordneten Elektronikeinheit 23 elektrisch verbunden.

Die Befestigung des Messgerätes 10 an der,Behälterwand 16 erfolgt mittels eines auf ein Aussengewinde 28 am zylindrischen Teil 14 des Kunststoffgehäuses 12 aufgeschraubten Gewinderinges 30. Durch Festziehen des Gewinderinges 30 wird ein den zylindrischen Teil 14 umgreifender Gegenlagerring 32 auf der Behälterinnenseite gegen die Behälterwand 16 gepresst und damit das Kunststoffgehäuse 12 kraftschlüssig fixiert. Die Abdichtung des zylindrischen Teils 14 gegen die Behälterwand 16 erfolgt über im Gegenlagerring 32 angeordnete Ringdichtungen 34.

Der auf der Behälteraussenseite offene zylindrische Teil 14 des Kunststoffgehäuses 12 ist mit einer ebenfalls auf das Aussengewinde 28 aufgeschraubten Abdeckhaube 36 verschlossen. Ein durch die Abdeckhaube 36 hindurchgeführtes elektrisches Anschlusskabel 38 dient einerseits zur externen Stromversorgung der Elektronikeinheit und andererseits zur Weiterleitung eines Ausgangsignals, welches beispielsweise zur Auslösung eines Schaltvorgangs dient.

Die Funktionsweise des Messgerätes 10 zur Grenzstanderfassung wird nachfolgend anhand der Fig. 3 näher erläutert.

Das streifenförmige Parallel-Bimorph-Piezoelement 22 setzt sich aus zwei Streifenelementen 40, 42 zusammen, die aneinanderliegen und eine gemeinsame Mittelelektrode 44 aufweisen. Jedes der Streifenelemente 40,42 ist auf seiner Aussenseite mit einer entsprechenden Aussenelektrode 46,48 versehen.

Zwischen der Mittelelektrode 44 und der Aussenelektrode 46 des Streifenelementes 40 wird eine Wechselspannung U1 mit der Oszillatorfrequenz f1 angelegt. Als Folge davon wird das Piezoelement 22 und damit auch die dieses umgebende Kunststoffhülle 44 zu einer Schwingung angeregt. Die Schwingungsrichtung x liegt senkrecht zu den Flachseiten des Piezoelementes 22 und die maximale Schwingungsauslenkung am freien Ende 26 der Kunststoffhülle 24, d.h. an der Flossenspitze. Als Oszillatorfrequenz wird vorzugsweise die Resonanzfrequenz gewählt. Zwischen der Mittelelektrode 44 und der Aussenelektrode 48 des Streifenelementes 42 wird die Schwingamplitude U2 mit der Frequenz f2 gemessen und von der Elektronikeinheit in ein Ausgangsschaltsignal umgewandelt, mit weichem beispielsweise ein Relais zur Ansteuerung einer Pumpe geschaltet werden kann. Das Parallel-Bimorph-Piezoelement 22 wird somit gleichzeitig als Aktor und als Sensor genutzt.

Die von der Wechselspannung U1 mit der Oszillatorfrequenz f1 angeregte Schwingung der Kunststoffhülle oder Flosse 24 wird durch das Umgebungsmedium mehr oder weniger stark gedämpft. Beim Erreichen eines Grenzstandes erfolgt ein Wechsel des Umgebungsmediums von beispielsweise Luft auf eine Flüssigkeit oder umgekehrt und das Sensorsignal erfährt eine entsprechende Aenderung.

Zur Auswertung des Sensorsignals kann sowohl die Aenderung der Signalamplitude als auch die Verschiebung der Resonanzfrequenz herangezogen werden. Einflüsse von Störschwingungen aufgrund von Behältervibrationen und/oder von Rührwerken verursachte Strömungsturbulenzen sind vernachlässigbar. Der rohrförmige Teil 18 des Kunststoffgehäuses 12 dient als Schutzrohr und sorgt dafür, dass keine unzulässig hohen mechanischen Belastungen auf die Flosse bzw. Kunststoffhülle 24 abgegeben werden.

Neben der in den Fig. 1 und 2 gezeigten Montagemöglichkeit kann ein Einbau des Gerätes 10 auch durch Einschweissen in eine Behälterwand bzw. in eine Rohrleitung erfolgen.

Bei einer weiteren Ausführungsform kann das Messgerät 10 in einer vereinfachten Weise direkt in die Rohrwand angeschraubt werden.

## Patentansprüche

1. Verfahren zur Grenzstanderfassung von Flüssigkeiten und Schüttgütern in Behältern und Rohrleitungen, bei dem die Aenderung des Schwingverhaltens eines zum Schwingen angeregten Sensors elektronisch erfasst und zur Auslösung eines Schaltbefehls verwendet wird, dadurch gekennzeichnet, dass bei einem als Sensor eingesetzten Parallel-Bimorph-Piezoelement (22) mit einer gemeinsamen Mittelelektrode (44) und zwei Aussenelektroden (46,48) zwischen der Mittelelektrode (44) und einer ersten Aussenelektrode (46) eine erste Wechselspannung (U1) mit einer Oszillatorfrequenz (f1) angelegt, zwischen der Mittelelektrode (44) und der zweiten Aussenelektrode (48) eine zweite Wechselspannung als Schwingamplitude (U2) mit zugehöriger Schwingfrequenz (f2) gemessen und die gemessene Schwingamplitude (U2) oder Schwingfrequenz (f2) in ein Ausgangsschaltsignal umgewandelt wird.

2. Verfahren nach Anspruch 1, dadurch gekennzeichnet, dass als Oszillatorfrequenz (f1) die Resonanzfrequenz gewählt wird.

3. Vorrichtung zur Durchführung des Verfahrens nach Anspruch 1 oder 2, dadurch gekennzeichnet, dass das Piezoelement (22) flüssigkeitsdicht in eine Kunststoffhülle (24) eingesetzt ist.

4. Vorrichtung nach Anspruch 3, dadurch gekennzeichnet, dass die Kunststoffhülle (24) flüssigkeitsdicht mit einem die Wand (16) eines Behälters oder einer Rohrleitung durchsetzenden Kunststoffgehäuse (12) verbunden ist.

5. Vorrichtung nach Anspruch 3 oder 4, dadurch gekennzeichnet, dass die Kunststoffhülle (24) mit dem Piezoelement (22) in ein am Kunststoffgehäuse (12) angeformtes Schutzrohr (18) einragt.

6. Vorrichtung nach einem der Ansprüche 4 oder 5, dadurch gekennzeichnet, dass im Kunststoffgehäuse (12) eine mit dem Piezoelement (22) elektrisch verbundene Elektronikeinheit (23) angeordnet ist.
